**Europäisches Patentamt**

**European Patent Office**

**Office européen des brevets**

(19)

(11) Veröffentlichungsnummer: **0 047 793**

**A1**

(12) **EUROPÄISCHE PATENTANMELDUNG**

(21) Anmeldenummer: **80105523.7**

(22) Anmeldetag: **15.09.80**

(51) Int. Cl.³: **B 62 D 37/02**
**B 60 Q 1/30, B 60 Q 1/44**

(43) Veröffentlichungstag der Anmeldung:
**24.03.82 Patentblatt 82/12**

(84) Benannte Vertragsstaaten:
**DE**

(71) Anmelder: **VESTATEC Schwien & Körning GmbH & Co. KG**
**Karlstrasse 2**
**D-4653 Oer-Erkenschwick(DE)**

(72) Erfinder: **Schwien, Peter Klaus**
**Bachstrasse 20**
**D-4352 Herten(DE)**

(74) Vertreter: **Herrmann-Trentepohl, Werner, Dipl.-Ing. et al,**
**Postfach 1140 Schaeferstrasse 18**
**D-4690 Herne 1(DE)**

(54) **Vorrichtung zur Halterung zusätzlicher Bremsleuchten an Kraftfahrzeugen.**

(57) Zusätzliche Bremsleuchten an Kraftfahrzeugen sind zur Vermeidung einer Beeinträchtigung der Sichtverhältnisse in einem Spoiler (1) integriert, der als Halterung der Bremsleuchten (4) ausgebildet ist. Hierdurch werden die Bremsleuchten (4) mittels des Spoilers (1) am Kraftfahrzeug befestigt.

FIG.1

EP 0 047 793 A1

**Dipl.-Phys. Eduard Betzler**

**Dipl.-Ing. W. Herrmann-Trentepohl**

PATENTANWÄLTE

Professional representatives
to the European Patent Office.

8000 München 40,
Eisenacher Straße 17

Pat.-Anw. Betzler

Fernsprecher: 089 / 36 30 11
36 30 12
36 30 13

Telegrammanschrift:
Babetzpat München
Telex 5 215 360

4690 Herne 1,
Schaeferstraße 18
Postfach 1140

Pat.-Anw. Herrmann-Trentepohl
Fernsprecher: 0 23 23 / 5 10 13
5 10 14

Telegrammanschrift:
Bahrpatente Herne
Telex 08 229 853

0047793

Ref.· A 30 483 Z/Wd.
in der Antwort bitte angeben

Zuschrift bitte nach:

Abholfach

12.9.1980

VESTATEC Schwien & Körning GmbH & Co. KG, Karlstraße 2,
4653 Oer - Erkenschwick

## Vorrichtung zur Halterung zusätzlicher Bremsleuchten an Kraftfahrzeugen

Die Erfindung bezieht sich auf eine Vorrichtung zur Halterung zusätzlicher Bremsleuchten an Kraftfahrzeugen.

Im Zuge einer intensivierten Unfallforschung und daraus resultierenden erhöhten Sicherheitsbestimmungen und Sicherheitsanforderungen setzen sich zusätzliche Bremsleuchten zu den im Fahrzeug ohnehin herstellerseitig bereits installierten Bremsleuchten in zunehmendem Maße durch. Diese an der Rückseite des Fahr-

- 2 -

Bankkonten:     Bayerische Vereinsbank München 952 287     Dresdner Bank AG Herne 7-520 499     Postscheckkonto Dortmund 558 68-467

zeugs angebrachten zusätzlichen Bremsleuchten sollen insbesondere im Kolonnenverkehr Bremsmanöver von weiter vorausfahrenden Fahrzeugen schneller erkennen lassen, welche ansonsten nur vom unmittelbar dahinter fahrenden Fahrzeug aus erkannt werden. Auf diese Weise kann die Gefahr von Auffahrunfällen wesentlich herabgesetzt werden.

Um diesem Zweck gerecht zu werden, ist es für diese zusätzlichen Bremsleuchten erforderlich, daß sie auch in geeigneter Höhe angebracht werden. Nach einer Bestimmung müssen diese zusätzlichen Bremsleuchten · wenigstens in einem Abstand von 1000 mm zur Fahrbahnoberfläche am Fahrzeug angebracht werden.

Bislang ist es bekannt, diese zusätzlichen Bremsleuchten im Innenraum des Fahrzeuges im Bereich der Heckscheibe anzubringen. Zur Verankerung der Bremsleuchten dienen Stangen, die im Fahrzeuginneren verspannt oder auf das Ablegefach aufgeschraubt werden. Hierdurch wird aber das Platzangebot innerhalb des Fahrzeuges geschmälert und die Sicht des Fahrers nach hinten wesentlich beeinträchtigt. Eine Anordnung der Bremsleuchten auf der vor der Heckscheibe gelegenen Ablage sind allerdings diese Bremsleuchten zumeist zu niedrig angeordnet und wird überdies die zur Ablage verfügbare Fläche reduziert, zumal auf diese Ablagefläche häufig auch Lautsprecher u.dgl. montiert sind. Die Anbringung der Bremsleuchten mittels Saugnäpfe an der Heckscheibeninnenseite hat sich nicht bewährt, da bei den im Straßenverkehr auftretenden Stößen und daraus resultierenden Schwingungen und Vibrationen des Fahrzeuges die Saugnäpfe zusammen mit den Bremsleuchten bereits nach kurzer Zeit herabfallen. Versuche, diese Bremsleuchten an der Heckscheibe anzugeben, haben gezeigt, daß hierdurch ebenfalls die Sichtbarkeit nach hinten stark beeinträchtigt wird. Dies gilt auch für sonstige Halter von Bremsleuchten, die am Fahrzeug verankert werden und sich in den Bereich der Heckscheibe erstrecken.

Hier will die Erfindung Abhilfe schaffen. Die Erfindung, wie sie in den Ansprüchen gekennzeichnet ist, löst die Aufgabe, eine Vorrichtung zu schaffen, bei der unter Beibehaltung des durch zusätzliche Bremsleuchten erreichten Sicherheitswertes für nachfolgende Fahrzeuge durch die zusätzliche Anbringung dieser Leuchten am Fahrzeug bedingte Beeinträchtigungen der Sicherheit für insbesondere den Fahrer des Fahrzeuges ausgeschlossen sind.

Durch die Maßnahme der Halterung für die zusätzlichen Bremsleuchten als Spoiler, der am Heck oder an der Rückseite des Fahrzeuges angebracht werden kann, wird die bislang nur die Sicht oder den Platz innerhalb eines Fahrzeuges beeinträchtigende Halterung nunmehr zur Stabilisierung des Fahrzeuges herangezogen, da der Spoiler bekanntermaßen die Bodenhaftung des Fahrzeuges insbesondere bei höheren Geschwindigkeiten vergrößert. Da im Spoiler die Bremsleuchten integriert sind, lassen sich Halter und Bremsleuchten als Baueinheit sehr schnell und einfach am Fahrzeug anbringen. Hierfür genügt es beispielsweise, den Spoiler im Bereich der Stirnränder der Heckscheiben am Fahrzeugblech anzukleben oder den Spoiler mit dem Fahrzeugblech zu verschrauben, so daß die Befestigung der zusätzlichen Bremsleuchten nicht vom Fachmann vorgenommen werden muß. Hinzu kommt, daß die integrierten Bremsleuchten zumindest teilweise im Spoiler gekammert sind, so daß sie gegen Beschädigungen geschützt sind und die Verletzungsgefahr von vorstehenden Bauteilen am Fahrzeug gemindert ist. Durch diese Halterung werden aber nicht nur die Fahreigenschaften des Fahrzeuges verbessert, sondern wird auch eine freie Sicht durch die Heckscheibe nach hinten gewährleistet, da die Bremsleuchten nunmehr unmittelbar in den Eckbereichen der Heckscheibe angeordnet werden können. Teile der Halterung ragen nicht länger in den Bereich der Heckscheibe hinein. Ein weiterer Vorteil der Erfindung ist schließlich darin zu sehen, daß hierdurch ein sehr großer Abstand zwischen den zusätzlichen Bremsleuchten eingehalten werden kann, was aus Sicherheitsüberlegungen angestrebt wird.

Zweckmäßigerweise ist die Halterung als langgestreckte Leiste mit an den Enden vorspringenden Flanschen ausgebildet und sind die Bremsleuchten in den Eckbereichen von Leiste und Flansch aufgenommen. Hierdurch wird eine einfache Ausbildung der Halterung erzielt, die sich ohne die Sicht durch die Heckscheibe zu beeinträchtigen, an den Rändern der Heckscheibe anbringen läßt. Durch die Flansche werden die Bremsleuchten eingefaßt und gegen Beschädigungen gesichert. Zugleich läßt sich hierdurch die Bremsleuchte gut an der Halterung verankern.

In diesem Zusammenhang ist es zweckmäßig, daß die Leiste einen im wesentlichen flügelförmigen Querschnitt aufweist und an den Leistenenden von einer Flügelfläche Flügelsegmente zur Bildung von Eckaussparungen abgenommen sind, in welchen die Bremsleuchten angeordnet sind. Hierdurch lassen sich die Bremsleuchten sehr gut in die als Spoiler verwendete Leiste integrieren. Die gleiche Wirkung wird dadurch erreicht, daß die Leiste zur wenigstens teilweisen Kammerung der Bremsleuchten im Bereich der Enden Sicken aufweist, an die die Flansche anschließen. Die Bremsleuchten werden hierbei durch Sicken und Flansche eingefaßt und sind hierdurch gegenüber Stoßbeanspruchungen sehr gut geschützt. Die derart aufgebaute Leiste läßt sich zudem in außerordentlich einfacher Weise herstellen, was beispielsweise durch Kunststoffausschäumung einer entsprechenden Form erfolgen kann.

Im folgenden wird die Erfindung anhand von lediglich ein Ausführungsbeispiel darstellenden Zeichnungen näher erläutert. Es zeigen

Fig. 1   in perspektivischer Darstellung die als Spoiler ausgebildete erfindungsgemäße Halterungsvorrichtung, sowie

Fig. 2   die am Heck eines Fahrzeuges montierte Halterungsvorrichtung.

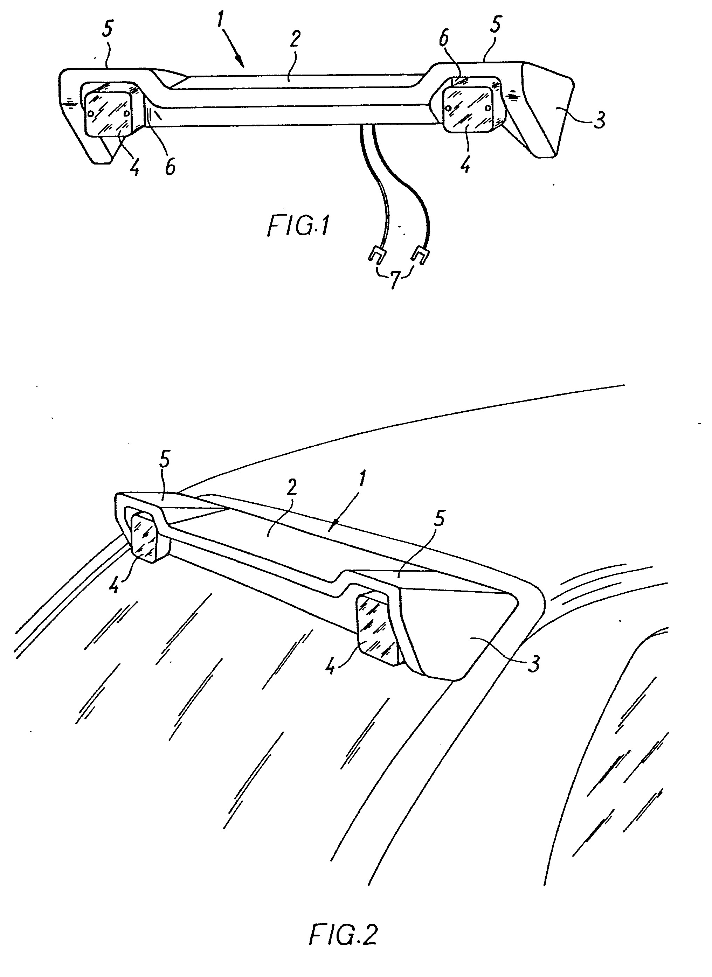

Der aus Fig. 1 ersichtliche Heckspoiler 1 ist als Leiste 2 ausgebildet und dient als Halterung für zusätzlich an die Rückseite eines Fahrzeuges, also am Heck angebrachte Bremsleuchten. Die Leiste 2, die zweckmäßigerweise einen flügelförmigen Querschnitt mit abgestumpften Spitzen oder auch einen im wesentlichen dreieckförmigen Querschnitt aufweist, ist an ihren beiden Enden mit vorspringenden Flanschen 3 ausgebildet. In den hierdurch gebildeten Eckbereichen des Spoilers 1 sind die Bremsleuchten 4 angeordnet. Die Bremsleuchten 4 sind hierbei durch Leiste 2 und Flansch 3 zumindest teilweise gekammert, so daß sie über den Spoiler nicht vorstehen und durch den Spoiler wirkungsvoll geschützt sind.

Hierbei ist es so zu verstehen, daß die Flansche 3 von der Leiste entweder nach oben oder nach unten abstehen, was letztlich vom Fahrzeug abhängig ist, an welches der Spoiler angebracht werden soll. Wie aus Fig. 1 recht deutlich hervorgeht, sind in den Eckbereichen des Spoilers 1 Sicken 5 ausgebildet, in denen die Bremsleuchten 4 aufgenommen sind. Die Sicken sind an ihrer Rückseite mit der Spoileroberfläche bündig. Hierdurch ergibt sich ein außerordentlich kompakter Aufbau des Spoilers 1. Die Sicken 5 sind an ihrer Rückseite durch eine Wand 6 abgeschlossen, an welcher gegebenenfalls Montageöffnungen zur Durchführung der Leitungskabel der Bremsleuchten vorgesehen sind. Zweckmäßigerweise sind die Bremsleuchten an diese Wand 6 angeschraubt. Durch diese Wand 6 wird eine einheitliche Rückfläche des Spoilers 1 erreicht, so daß dieser leicht auf die Heckseite des Fahrzeugs geklebt werden kann.

Die Anordnung des Heckspoilers 1 am Fahrzeug ist aus Fig. 2 ersichtlich. Der dargestellte Heckspoiler 1 ist am oberen Rand der Heckscheibe an die Fahrzeugkarosserie angeklebt. Aus Fig. 2 geht recht deutlich hervor, daß die Sicht durch die Heckscheibe durch die erfindungsgemäße Halterungsvorrichtung nicht beeinträchtigt wird. Die zusätzlichen Bremsleuchten befinden sich in den oberen äußersten Eckbereichen der Heckscheibe, wo sie nicht stören. Je nach Fahrzeugtyp kann die Leiste auch derart weit ausgebildet sein, daß die zusätzlichen Bremsleuchten außerhalb des Bereichs der Heckscheibe angeordnet sind.

Im Spoiler 1 können weiter Bohrungen oder kanalförmige Aussparungen vorgesehen sein, in denen die Leitungen für die Bremsleuchten verlegt und zusammengeführt sind, so daß sie als ein Anschluß 7 aus dem Spoiler 1 herausgeführt sind. Dies erleichtert weiter die Montage der Halterungsvorrichtung, da nunmehr eine Öffnung in der Fahrzeugkarosserie vorzusehen ist, durch die die Bremskabel geführt werden müssen.

Der dargestellte Spoiler 1 stellt ein einfaches Formelement dar und ist zweckmäßigerweise aus geschäumtem Kunststoff hergestellt. Die Halterungsvorrichtung zeichnet sich somit durch ein geringes Gewicht aus. Zugleich wirkt der Kunststoff als Dämpfungselement für die im Spoiler aufgenommenen Bremsleuchten, so daß durch diese keine Vibrationen im Fahrzeug injiziert werden. Durch die Kammerung der Bremsleuchten durch Leiste und Flansch, insbesondere Sicke oder Aussparung und Flansch, sind die Bremsleuchten in sehr guter Weise in den Spoiler integriert, so daß lästige Windgeräusche auch bei höheren Fahrten durch die Bremsleuchten nicht hervorgerufen werden.

Wie bereits beschrieben, besteht eine zweckmäßige Anbringungsmöglichkeit im Aufkleben des Spoilers an die heckseitige Fahrzeugkarosserie. Allerdings kann der Spoiler auch mit der Fahrzeugkarosserie verschraubt sein, wobei entsprechende Schrauböffnungen (nicht gezeigt) im Bereich der die Sicke 5 verschließenden Wand 6 oder flanschseitig vorgesehen sein können.

Es liegt auf der Hand, daß die Flansche 3 und die Leiste 2 so geformt sind, daß sie sich gut an die entsprechende Kontur des Fahrzeuges anpassen. Dies wird gemäß Fig. 2 am Flansch dadurch erreicht, daß dieser etwa dreieckförmig ausgebildet ist.

Wie aus Fig. 2 weiter hervorgeht, wird durch die an den beiden Enden der Leiste 2 ausgebildeten Sicken 5 je ein Vorsprung gebildet, so daß zwischen den beiden Sicken in gewissem Sinne ein Luftkanal gebildet wird. D.h., daß durch die erfindungsgemäße Halterung für die Bremsleuchten nicht nur die Bodenhaftung des Fahrzeugs, sondern auch dessen Seitenstabilität durch die vorspringenden Sicken 5 verbessert wird.

Patentansprüche

1. Vorrichtung zur Halterung zusätzlicher Bremsleuchten an Kraftfahrzeugen , d a d u r c h    g e k e n n - z e i c h n e t , daß die Halterung als Spoiler (1) ausgebildet ist, in welchem die zusätzlichen Bremsleuchten (4) integriert sind.

2. Vorrichtung nach Anspruch 1 , d a d u r c h g e k e n n z e i c h n e t , daß die Halterung als langgestreckte Leiste (2) mit an den Enden vorspringenden Flanschen (3) ausgebildet ist und die Bremsleuchten (4) in den Eckbereichen von Leiste (2) und Flansch (3) aufgenommen sind.

3. Vorrichtung nach Anspruch 1 oder 2 , d a d u r c h g e k e n n z e i c h n e t , daß die Leiste (2) einen im wesentlichen flügelförmigen Querschnitt aufweist und an den Leisten von einer Flügelfläche Flügelsegmente zur Bildung von Eckaussparungen abgenommen sind, in welchen die Bremsleuchten angeordnet sind.

4. Vorrichtung nach Anspruch 1 oder 2 , d a d u r c h g e k e n n z e i c h n e t , daß die Leiste (2) zur wenigstens teilweisen Kammerung der Bremsleuchten (4) ähnlich der Enden Sicken (5) aufweist, an die die Flansche (3) anschließen.

5. Vorrichtung nach Anspruch 4 , d a d u r c h g e k e n n z e i c h n e t , daß sich die Leiste (2) im wesentlichen über die Länge des Heckfensters des Kraftfahrzeuges erstreckt.

6. Vorrichtung nach Anspruch 4 oder 5 , d a d u r c h g e k e n n z e i c h n e t , daß der Boden der Sicke (5) zur Leistenoberfläche geneigt ist und an einer Längskante der Leiste (2) bündig mit der Leistenoberfläche ausläuft.

7. Vorrichtung nach einem der Ansprüche 3 bis 6 , d a d u r c h g e k e n n z e i c h n e t ,daß die Sicken (5) und Aussparungen im Bereich der zur Befestigung der Leiste (2) am Fahrzeug bestimmten Stirnseite der Leiste (2) durch eine mit der Leistenstirnseite bündig abschließenden Wand (6) überbrückt oder abgeschlossen sind.

8. Vorrichtung nach einem der Ansprüche 1 bis 7, d a d u r c h g e k e n n z e i c h n e t , daß die Bremsleuchten (4) mit der Leiste (2) versorgt oder verklebt sind.

9. Vorrichtung nach einem der Ansprüche 2 bis 8, d a d u r c h g e k e n n z e i c h n e t , daß die Leiste (2) aus geschäumtem Kunststoff hergestellt ist.

FIG.1

FIG.2

Europäisches
Patentamt

**EUROPÄISCHER RECHERCHENBERICHT**

**0047793**

Nummer der Anmeldung

EP 80 10 5523

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | <u>FR - A - 2 021 053</u> (HONDA GIKEN KOGYO KABUSHIKI KAISHA) <br> * Figuren 1-3 * <br><br> -- | 1-9 |
| | <u>US - A - 3 791 468</u> (BRYAN) <br> * Figur 1 * <br><br> -- | 1 |
| | <u>US - A - 3 318 631</u> (LEVY) <br> * Figuren 1-4; Spalte 3, Zeilen 1-31 * <br><br> -- | 1,5 |
| A | <u>FR - A - 1 575 852</u> (SOCIETE ANO-NYME ANDRE CITROEN) <br> * Figuren 1,2 * <br><br> -- | 1 |
| A | <u>FR - A - 1 405 928</u> (SOCIETE D'E-TUDES ET DE CONSTRUCTIONS AUTO-MOBILES C.D.) <br> * Figuren 1-9 * <br><br> ---- | 1 |

**KLASSIFIKATION DER ANMELDUNG (Int Cl ·)**

B 62 D 37/02
B 60 Q 1/30
1/44

**RECHERCHIERTE SACHGEBIETE (Int. Cl ·)**

B 62 D 37/02
37/00
B 60 Q 1/30
1/26
1/44

**KATEGORIE DER GENANNTEN DOKUMENTE**

X: von besonderer Bedeutung

A: technologischer Hintergrund

O: nichtschriftliche Offenbarung

P: Zwischenliteratur

T. der Erfindung zugrunde liegende Theorien oder Grundsätze

E: kollidierende Anmeldung

D: in der Anmeldung angeführtes Dokument

L: aus andern Gründen angeführtes Dokument

& Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-04-1981 | ONILLON |

EPA form 1503.1 06.78